# EUROPEAN PATENT SPECIFICATION

(11) **EP 0 535 832 B1**
(45) Date of publication and mention of the grant of the patent: **11.06.1997**
(21) Application number: 92308521.1
(22) Date of filing: 18.09.1992
(51) Int. Cl.: G11B 20/00, G11B 20/12

(54) **Disc recording/reproducing apparatus and disc**
Plattenaufzeichnungs- und Wiedergabegerät und Platte
Appareil d'enregistrement et reproduction de disques et disque

(30) Priority: 27.09.1991 JP 275069/91
(43) Date of publication of application: 07.04.1993
(73) Proprietor: SONY CORPORATION, Tokyo (JP)
(72) Inventor: Yoshida, Tadao, c/o Patents Division, Shinagawa-ku, Tokyo 141 (JP)
(74) Representative: Harris, Ian Richard

(56) References cited:
- EP-A- 0 463 183
- EP-A- 0 472 414
- WO-A-91/14265
- US-A- 4 075 665

## Description

This invention relates to a disc recording/reproducing apparatus.

WO-A-91/14256 discloses a disc recording/reproducing apparatus comprising: memory means into which digital data generated by data compression of input data are sequentially written, and from which the written data are sequentially read out as recording data having a transfer rate higher than a transfer rate of the written data; recording/reproducing means in which recording data read out from said memory means are divided into clusters, cluster connection sectors longer than an interleaving length for interleaving processing being provided at connection portions of respective clusters, thus to implement interleaving processing on recording data to record them in a recording/reproducing area and to reproduce the recorded data from said recording/reproducing area; and reproducing means for reproducing recorded data.

Optical discs can have a recording capacity greater than that of magnetic discs by 2 to 3 orders of magnitude, and can provide higher speed access than a recording medium in a tape form. Further, such optical discs can carry out recording/reproduction of data in a manner avoiding contact with a medium, thus advantageously providing an excellent durability, etc. For these reason, optical discs have been frequently used in recent years. A well known example of an optical disc, is the so-called CD (Compact Disc).

For optical disc portable recording/reproducing equipment, and non-portable recording and/or reproducing apparatus similar thereto there are standardized CD disc formats having either a disc diameter of 12 cm or a disc diameter of 8 cm (so called a CD single). However, particularly for portable recording/reproducing equipment of about a so-called "pocket-size" for use with stereo head phones, a disc having a diameter of 12 cm means that the outside dimensions of the recording/reproducing apparatus become too large, resulting in poor portability. For this reason, it is desirable to use a disc having a diameter of 8 cm or less. However, to provide a portable recording and/or reproducing apparatus or an apparatus of about a pocket size using an optical disc having a diameter of about 8 cm or less, would lead to the following problems.

Firstly, in a standard CD format (CD-DA format) for optical discs, on which stereo digital PCM audio signals having a sampling frequency of 44.1 KHz and subjected to 16 bit quantization are recorded (conventionally the recording is made by the manufacturer and only reproduction or playback is conducted by the user) the reproduction or playback time (recording time) of the disc having a diameter of 8 cm is limited to a maximum of about 20 to 22 minutes. Thus it would not be possible to record, for example, an entire classical music symphony. Preferably, a maximum reproduction or playback time of about 74 minutes or more (i.e. of the same order as that of the 12 cm CD presently available) should be provided. Further, in the conventional CD-DA format, recording cannot be carried out by the user. In addition, a non-contact optical pick-up device is easily affected by mechanical vibration, etc., so deviation in tracking and/or defocusing (deviation in focusing), etc. are apt to result from vibration, etc. Preferably, therefore, in order to facilitate the carrying of such equipment, measures to mitigate adverse effects during reproduction due to deviation in tracking or defocusing, etc. should be undertaken.

Further, in a proposed CD-MO format (format using a recordable magneto-optical disc) as an extended format of the standard CD format (CD-DA format), the recording/reproducing time of a disc having a diameter of 8 cm is disadvantageously limited to about 20 to 22 minutes (i.e. the same as that of the 8 cm CD-DA format). In addition, the deviation in tracking and/or defocusing of an optical pick-up device resulting from mechanical vibration, etc. are apt to occur. Measures for preventing undesired effects on the recording/reproducing operations resulting from such vibration, etc. are desirable.

Table 1 below represents parameters which have been proposed for a CD-I (CD-interactive) format for recording/reproducing a bit-compressed digital audio signal.

**Table 1**

| LEVEL | SAMPLING FREQUENCY | QUANTIZATION BIT NO. | BAND WIDTH | PLAYBACK TIME STEREO/MONAURAL |
|---|---|---|---|---|
| A | 37.8KHz | 8 | 17kHz | 2/4 |
| B | 37.8kHz | 4 | 17kHz | 4/8 |
| C | 18.9kHz | 4 | 8.5kHz | 8/16 |

In this Table 1, when a disc recorded for example in the B level mode is reproduced, a signal obtained by bit-compressing a digital signal of the standard CD-DA format so that its signal density becomes equal to an approximately quadruple value (a value about four times greater than that of the original signal) can be reproduced. Accordingly, for example, when all recording data are stereo audio compressed data, reproduction of a time four times (four channels) greater than the standard time can be carried out. As a result, even with an optical disc having a diameter of about 8 cm or less, recording/reproduction of about 70 minutes can be carried out.

In the proposed CD-I format, when a disc is rotationally driven at the same linear velocity as that of the standard CD-DA format, successive audio compressed data will be reproduced at a rate of 1/n recording units on the disc. This unit is called a block or sector. One block (sector) is comprised of 98 frames, and the period is 1/75 seconds. In this instance, n is the above-mentioned reproduction or playback time (table 1) or a numeric value corresponding to a bit compression ratio for data. For example, in the B level stereo mode, n is equal to 4. Accordingly, in the B level stereo mode, a data train in which ones of respective four sectors are respectively caused to serve as an audio sector as indicated below:
S D D D S D D D ...

(S is an audio sector, and D is any other data sector) are recorded on a disc. It is to be noted that since, at the time of an actual recording, a predetermined encode processing (error correction coding processing and interleaving processing) similar to that for audio data of an ordinary CD format is implemented to the above-mentioned data train, data of the audio sector S and data of the data sector D are arranged in a distributed manner in recording sectors on the disc. The other data sectors D may include, for example, video data or computer data. If bit-compressed audio signals are employed in the data sectors D, a data string [S1, S2, S3, S4, S1, S2, S3, S4 ...] of four channel audio sectors S1 - S4, cyclically arranged in a successive manner, will be subjected to encode processing and are recorded on the disc.

In recording/reproducing successive audio signals, the above-mentioned four channel audio signals are connected in a successive manner from the first channel to the fourth channel. Continuous reproduction of a quadruple time is carried out by reproducing data of the first channel corresponding to the audio sector S1 from the disc innermost circumference up to the outermost circumference, then returning to the disc innermost circumference for a second time to reproduce in turn data of the second channel corresponding to the audio sector S2 up to the outermost circumference to reproduce data of the third channel corresponding to the next audio sector S3 from the disc innermost circumference to the outermost circumference for a second time to finally reproduce data of the fourth channel corresponding to the remaining audio sector S4 from the disc innermost circumference up to the other circumference for a second time.

However, in a continuous reproduction as described above, several long track jump operations returning from the outermost circumference to the inner circumference are required. Since such track jump operations cannot be carried out instantaneously, there is the serious problem that reproduced data for that time is lost, so a reproduced sound is interrupted. Further, in order to attempt to record successive audio signals, it is impossible to record, e.g. a signal of the sector S2 alone by the relation of the interleaving processing at the time of recording. For this reason, interleaving processing of data of adjacent sectors S1 and S3, or interleaving processing of data of the peripheral sectors in addition thereto is required. As a result, it is necessary to rewrite signals in sectors already recorded. Accordingly, recording of such successive compressed audio data is very difficult.

In accordance with a first aspect of the invention therefore, there is provided a disc recording/reproducing apparatus comprising: memory means into which successively inputted data caused to be in a digital form are sequentially written, and from which the written inputted data are sequentially read out as recording data having a transfer rate higher than a transfer rate of the inputted data; recording/reproducing means in which recording data read out from said memory means are divided into clusters every predetermined number of sectors and cluster connection sectors longer than an interleaving length for interleaving processing are provided at connection portions of respective clusters, thus to implement interleaving processing on recording data to record them in a recording/reproducing area every cluster and to reproduce the recorded data from said recording/reproducing area; reproducing means for reproducing recorded data and additional data; and memory means into which reproduced data from said recording/reproducing means or said reproducing means are written, and from which the written reproduced data are sequentially read out as successive reproduced data; characterised in that the reproducing means is for reproducing recorded data and additional data from a reproduction or playback only area where recording data are recorded by the same data format as that of said recording/reproducing area and the additional data are recorded in sectors corresponding to cluster connection sectors.

In accordance with a further aspect of the invention, there is provided a reproduction or playback only disc wherein recording data is divided into clusters every predetermined number of sectors, cluster connection sectors longer than an interleaving length in the interleaving processing are provided at connection portions of respective clusters, recording data to which interleaving processing is implemented are recorded every cluster, and additional data are recorded in advance in the cluster connection sectors. This reproduction or playback only disc may be reproduced by the above-mentioned disc recording/reproducing apparatus. In this case, the additional data may be still picture data.

In accordance with yet a further aspect of the invention there is provided a disc which includes a recording/reproducing area where recording data is divided into clusters every predetermined number of sectors, cluster connection sectors longer than an interleaving length in the interleaving processing are provided at connection portions of respective clusters, and recording data to which interleaving processing is implemented are recorded every cluster; and characterised by a reproduction or playback only area where recording data of the same data format as that of the recording/reproducing area are recorded, and additional data are recorded in sectors corresponding to the cluster connection sectors. This disc may be recorded or reproduced by the above-mentioned recording/reproducing apparatus. Dummy data may be stored or recorded in the connection sector of the recording/reproducing area. The addition data may be still picture data.

In an embodiment of disc recording/reproducing apparatus according to this invention, memory means adapted so that successively inputted data caused to be in a digital form are written thereto implements time-base processing to recording data by sequentially reading out inputted data as recording data of a transfer speed higher than a transfer rate of the inputted data. Further, the recording/reproducing means divides recording data read out from the memory means into clusters every fixed number of sectors to provide cluster connection sectors longer than an interleaving length for an interleaving processing at connection portions of respective clusters to implement interleaving processing for recording data to record the interleaved data every cluster, and to reproduce recorded data from the recording/reproducing area. By providing the cluster connection sectors in this way, recording data is separated every cluster. Further, the reproducing means serves to reproduce recorded data and addition data from a reproduction or playback only area where recording data are recorded by the same data format as that of the recording/reproducing area and additional data are recorded in sectors corresponding to the cluster connection sectors. In addition reproduced data from the recording/reproducing means or the reproducing means are sequentially read out as successive reproduced data through memory means. Namely, time-axis expanding processing is implemented to reproduced data by the memory means.

Further, in a reproduction or playback only disc, cluster connection sectors longer than an interleaving length in the interleaving processing, provided at connection portions of respective clusters of recording data divided into clusters every fixed number of sectors, serve as a recording area for additional data.

Furthermore, recording data is divided into clusters every fixed number of sectors, and cluster connection sectors longer than an interleaving length in the interleaving processing are provided at connection portions of respective clusters. Thus, recording data to which interleaving processing is implemented are recorded and reproduced every cluster through the recording/reproducing area of a disc. In addition, from the reproduction or playback only area, recording data of the same data format as that of the recording/reproducing area are reproduced along with additional data.

The invention will be described hereinafter, by way of example, with reference to the accompanying drawings in which:
Figure 1 is a block diagram showing an example of the configuration of an optical disc recording/reproducing apparatus according to an embodiment of this invention;
Figure 2 is a plan view in a model form for explaining the structure of a magneto-optical disc used in the above-mentioned optical disc recording/reproducing apparatus;
Figure 3 is a block diagram showing the configuration of an optical head portion used in the above-mentioned optical disc recording/reproducing apparatus;
Figure 4 is a view showing a format of the cluster structure of recording data recorded into the recording/reproducing area of the above-mentioned magneto-optical disc;
Figure 5 is a view showing the state of a memory subjected to memory control in the recording system of the above-mentioned optical disc recording/reproducing apparatus;
Figure 6 is a view showing a format of the cluster structure of recording data recorded in the reproduction or playback only area of the above-mentioned magneto-optical disc; and
Figure 7 is a view showing the state of a memory subjected to memory control in the reproducing system of the above-mentioned optical recording/reproducing apparatus.

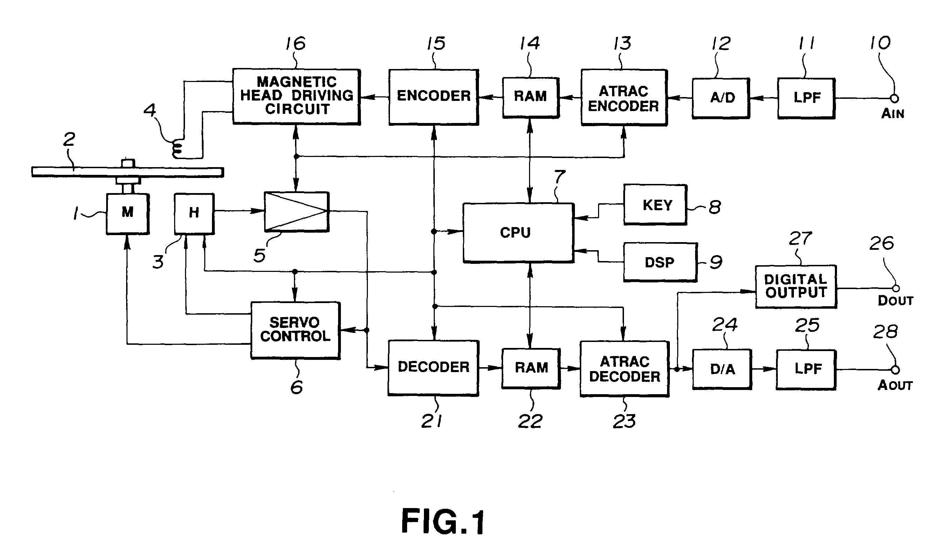

Figure 1 is a circuit diagram showing, in a block form, the outline of the configuration of an optical disc recording/reproducing apparatus according to an embodiment of this invention.

In the optical disc recording/reproducing apparatus shown in Figure 1, a magneto-optical disc having a recording/reproducing area where data can be recorded and reproduced, an optical disc for reproduction or playback only having a reproduction or playback only area for recording data, and a magneto-optical disc having both a recording/reproducing area where data can be recorded and reproduced and a playback only area for recording data may be used as a recording medium. These discs are adapted so that they are rotationally driven by a spindle motor 1. In this example, a magneto-optical disc 2 having a playback only area A₁₀ is adapted so that it is rotationally driven by the spindle motor 1.

The playback only area A₁₀ of the magneto-optical disc 2 includes a data area A₁₁ where data such as playing information, etc. is recorded, and a lead-in area A₁₂ provided on the inner circumferential side thereof. In this lead-in area A₁₂, TOC (Table of Contents) data indicating the recording position or recording content of the data area A₁₁ is recorded. In this playback only area A₁₀, digital data are recorded in advance as the presence and absence of pits corresponding to "1" and "0".

Further, the recording/reproducing area A₂₀ of the magneto-optical disc 2 includes a data area A₂₁ where data such as playing information, etc. is recorded, and a lead-in area A₂₂ provided on the inner circumferential side thereof. In this lead-in area A₂₂, TOC data indicating the recording position or the recording content of the data area A₂₁ is recorded. This recording/reproducing area A₂₀ serves as a magneto-optical recording medium area.

The optical disc recording/reproducing apparatus of this embodiment applies a modulated magnetic field to the magneto-optical disc 2 rotated by the spindle motor 1. The magneto-optical disc is irradiated by a laser beam by means of an optical head 3, for example, to carry out recording (so-called a magnetic modulation recording) of data along recording tracks of the recording/reproducing area A₂₀ of the magneto-optical disc 2. Recording tracks of the playback only area A₁₀ and the recording/reproducing area A₂₀ of the magneto-optical disc 2 are traced by a laser beam by means of the optical head 3 to optically reproduce data.

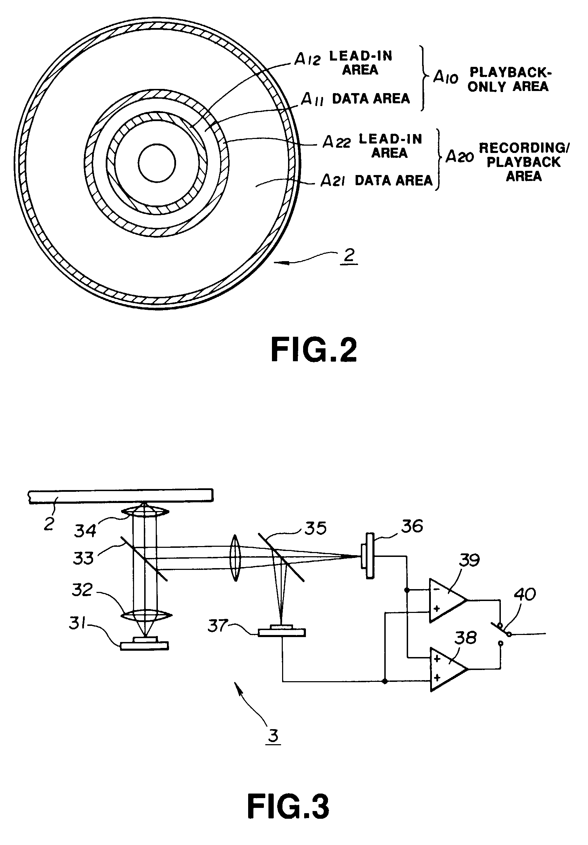

As shown in Figure 3, the optical head 3 comprises, for example, a laser light source 31 such as a laser diode, etc., optical components such as a collimator lens 32, a beam splitter 33, an object lens 34, and a polarized beam splitter 35, etc., first and second photodetectors 36, 37 for detecting a light separated by the polarized beam splitter 35, a first signal synthesis element 38 for performing additive synthesis of respective detection outputs by these photodetectors 36, 37, and a second signal synthesis element 39 for performing subtractive synthesis of respective detection outputs. The optical head 3 is provided at the position opposite to a magnetic head 4 with the magneto-optical disc 2 located therebetween. When recording data into the recording/reproducing area A₂₀ of the magneto-optical disc 2, the optical head 3 directs a laser beam onto a target track of the magneto-optical disc 2 to which a modulated magnetic field corresponding to recording data is applied to thereby carry out data recording by thermomagnetic recording. The magnetic head 4 is driven by a head driving circuit 16 of a recording system which will be described later. The optical head 3 also detects reflected light from a laser beam incident onto the target track to detect a focus error (e.g. by the so-called astigmatism method) and to detect a tracking error (e.g. by the so-called push-pull method). Further, when data is reproduced from the playback only area A₁₀ of the magneto-optical disc 2, the optical head 3 detects a change in a light quantity of a reflected light from a target track of the laser beam, thereby making it possible to provide a reproduced signal. Such a reproduced signal, which is obtained by carrying out additive synthesis of respective detection outputs by the photodetectors 36, 37 using the first signal synthesis element 38, is outputted through a changeover switch 40. Further, when data is reproduced from the recording/reproducing area A₂₀ of the magneto-optical disc 2, the optical head 3 detects a difference in the polarization angles (Kerr rotational angles) of reflected light from a target track of a laser beam, thereby making it possible to provide a reproduced signal. Such a reproduced signal, which is obtained by applying subtractive synthesis of respective detection outputs by the photodetectors 36, 37 using the second signal synthesis element 39, is outputted through the changeover switch 40. Here the above-mentioned changeover switch 40 is adapted so that switching control corresponding to respective operational modes is conducted by a system controller 7 which will be described later.

An output of the optical head 3 is delivered to a RF circuit 5 shown in Figure 1. This RF circuit 5 extracts a focus error signal or a tracking error signal from an output of the optical head 3 to deliver it to a servo control circuit 6, and to binary-encode the reproduced signal to be delivered to a decoder 21 of a reproducing system which will be described later.

The servo control circuit 6 comprises, for example, a focus servo control circuit, a tracking servo control circuit, a spindle motor servo control circuit, a sled servo control circuit, and so on. The focus servo control circuit carries out focus control of the optical system of the optical head 3 so that the focus error signal becomes equal to zero. Moreover, the tracking servo control circuit carries out tracking control of the optical system of the optical head 3 so that the tracking error signal becomes equal to zero. Further, the spindle motor servo control circuit controls the spindle motor 1 so that the magneto-optical disc 2 is rotationally driven at a predetermined rotational velocity (e.g. constant linear velocity). In addition, the sled servo control circuit moves the optical head 3 and the magnetic head 4 to a target track position of the magneto-optical disc 2 designated by the system controller 7. The servo control circuit 6, which carries out various control operations, delivers, to the system controller 7, information indicating operating states of respective components controlled by the servo control circuit 6.

To the system controller 7, a key input operation unit 8 and a display unit 9 are connected. This system controller 7 carries out control of the recording system and the reproducing system in an operational mode designated by operation input information by the key input operation unit 8. Further, this system controller 7 controls the recording position or the reproducing position on the recording tracks that the optical head 3 and the magnetic head 4 trace, on the basis of address information every sector reproduced from the recording track of the magneto-optical disc 2.

The recording system of the optical disc recording/reproducing apparatus includes an A/D converter supplied with an analog audio signal A_{IN} through a low-pass filter 11 from an input terminal 10. The A/D converter 12 quantizes the audio signal A_{IN} to form digital audio data of a data rate of 2 ch. x 16 bits x 44.1 KHz = 1.4 M bits/s. The digital audio data obtained from the A/D converter 12 is delivered to an ATRAC (Adaptive Transform Acoustic Coding) encoder 13.

This ATRAC encoder 13 analyzes 1.4 M bit/s data rate digital audio data obtained by quantizing the audio signal A_{IN} by using the A/D converter 12 so that a waveform on the time base is divided into about 1,000 components on the frequency base by so-called "orthogonal-transform processing". Data for a maximum of about 20 ms forms one block for extracting those components in order from frequency components considered to be important from a viewpoint of human sense of hearing to generate about 300K bits/s digital audio data. Namely, processing is carried out to compress the 1.4 M bit/s data rate digital audio data to 300 K bit/s data rate digital audio data, which is about one fifth thereof. Thus, the transfer rate of data is converted from 75 sectors/sec to about 15 sectors/sec in the standard CD-DA format.

Data write and readout for the memory 14 are controlled by the system controller 7. The memory 14 is used as a buffer memory for temporarily storing compressed audio data delivered from the ATRAC encoder 13 to record it onto the disc as required. Namely, the data transfer rate of compressed audio data delivered from the ATRAC encoder 13 is reduced to one fifth of the data transfer rate of 75 sectors/sec (i.e. 15 sectors/sec) and such compressed data are successively written into the memory 14. Such compressed data can be provided if recording of one of five sectors is carried out. Since such recording every fifth sector is virtually impossible, recording in successive sectors as described later is carried out. The recording is carried out in a burst at a data transfer rate of 75 sectors/sec with a cluster comprised of a predetermined plural number of sectors (e.g. 32 sectors + several sectors) through idle periods. Namely, in the memory 14, compressed audio data successively written at a low transfer rate of 15 (= 75/5) sectors/sec corresponding to the bit compression rate is read out in a burst at the transfer rate of 75 sectors/sec as recording data. With respect to data read out and recorded, the entire data transfer rate including the recording idle periods is a low rate of 15 sectors/sec, but momentary data transfer rate within a time of recording operation carried out in a burst is 75 sectors/sec.

Compressed audio data, i.e. recording data read out in a burst at the transfer rate of 75 sectors/sec from the memory 14 is delivered to the encoder 15. Here, in the data train delivered from the memory 14 to the encoder 15, a unit in which data are successively recorded by a single recording is caused to be a cluster comprised of a plurality of sectors (e.g. 32 sectors) with several sectors for the connection of clusters arranged before and after the cluster mentioned above. This cluster connection sector has a length set so that it is longer than an interleaving length at the encoder 15. Even if interleaving processing is carried out, such cluster connection sectors have no influence on data of adjacent clusters.

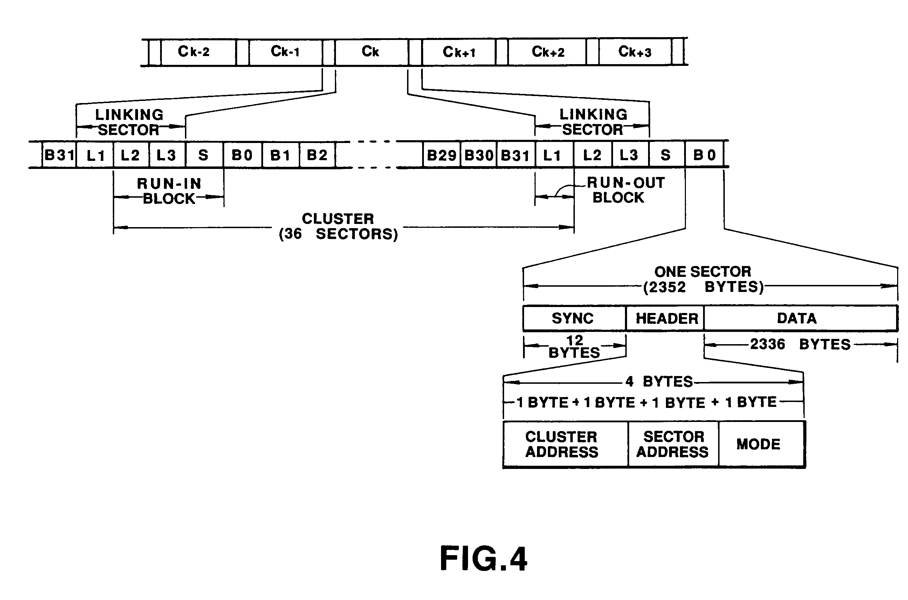

Namely, recording data (data read out from the memory 14) in this optical disc recording/reproducing apparatus is in a form such that recording data is divided into clusters every fixed number of sectors (or blocks), and that several sectors for connection of cluster are arranged between these clusters. As shown in Figure 4, a cluster C is comprised of 36 sectors (that is 32 sectors (blocks) B0 - B31, a single sub-code sector S, and three connection (linking) sectors L1 - L3) and is joined with adjacent clusters through the linking sectors L1 - L3. For recording one cluster (e.g. the K-th cluster C_{K}), 36 sectors including not only 32 sectors B0 - B31 of the cluster C_{K} and a single sub-code sector S, but also two sectors L2, L3 on the cluster C_{K-1} side (run-in block) and a single sector L1 on the cluster C_{K+1} side (run-out block) are recorded as a unit. At this time, recording data of 36 sectors is sent from the memory 14 to the encoder 15. As the result of the fact that the interleaving processing is carried out at the encoder 15, sequencing of a maximum distance of 108 frames (corresponding to 1.1 sectors) is carried out. With respect to data within the cluster C_{K}, those data fall sufficiently within the range from the run-in block L2, L3 up to the run-out block L1, and have therefore no influence on other clusters C_{K-1} on C_{K+1}. It is to be noted that, in the linking sectors L1 - L3, dummy data, e.g. 0, are arranged. Thus, undesired effects on original data by the interleaving processing can be avoided.

By carrying out such a recording for every cluster, it has been unnecessary to take into consideration interference by the interleaving processing with other clusters. As a result, the data processing can be simplified to a high degree. Further, in the case where recording data fails to be normally recorded at the time of recording as a result of defocusing, tracking deviation, other erroneous operations, or the like, re-recording can be carried out for each/every cluster. In addition, in the case where effective data reading fails to be carried out at the time of reproduction, rereading can be carried out for each/every cluster.

The encoder 15 implements coding processing for error correction (addition of parity and interleaving processing) or EFM coding processing, etc. to recording data delivered in a burst as described above from the memory 14. The recording data to which coding processing has been implemented by the encoder 15 is delivered to the magnetic head driving circuit 16. This magnetic head driving circuit 16, to which the magnetic head 4 is connected, drives the magnetic head 4 so as to apply a modulated magnetic field corresponding to the recording data to the magneto-optical disc 2.

Further, the system controller 7 carries out memory control as described above with respect to the memory 14, and carries out control of the recording position so as to successively record the recording data read out in a burst from the memory 14 by the memory control onto recording tracks of the magneto-optical disc 2. The control of the recording position is carried out by controlling, using the system controller 7, the recording position of the recording data read out in a burst from the memory 14 to deliver a control signal to the servo control circuit 6 for designating the recording position on the recording track of the magneto-optical disc 2.

In this optical disc recording/reproducing apparatus, digital data obtained from the A/D converter 12 is audio PCM data having a sampling frequency of 44.1 KHz, a quantization bit number of 16 bits, and a data transfer rate of 75 sectors/sec as described above. This audio PCM data is sent to the ATRAC encoder 13. As a result, compressed audio data having a data transfer rate of 15 sectors/sec, which is one fifth of the audio PCM data, is outputted. Thus, compressed audio data successively outputted at a transfer speed of 15 sectors/sec is delivered from the ATRAC encoder 13 to the memory 14.

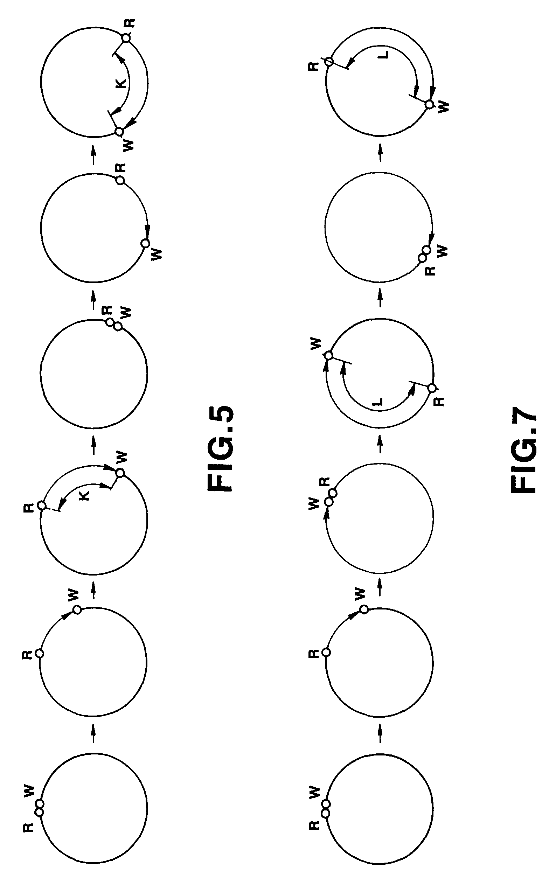

The system controller 7 successively increments, as shown in Figure 5, a write pointer W of the memory 14 at a transfer rate of 15 sectors/sec to thereby successively write the compressed audio data into the memory 14 at a transfer rate of 15 sectors/sec. When the amount of compressed audio data stored in the memory 14 exceeds a predetermined quantity K, the system controller 7 carries out memory control so as to increment a read pointer R of the memory 14 in a burst at a transfer rate of 75 sectors/sec to read out, from the memory 14, the compressed audio data (e.g. the predetermined quantity K thereof) as recording data at the transfer rate of 75 sectors/sec.

By means of such memory control by the system controller 7, compressed audio data successively outputted (e.g. at a transfer rate of 15 sectors/sec) from the ATRAC encoder 13 is written into the memory 14 at the transfer rate of 15 sectors/sec. When the amount of the compressed audio data stored in the memory 14 exceeds the predetermined quantity K, the compressed audio data (e.g. the predetermined quantity K thereof) is read out from the memory 14 in a burst at a transfer rate of 75 sectors/sec as recording data. Accordingly, it is possible to successively write data input into the memory 14 while ensuring a data write area having a capacity of more than a predetermined quantity in the memory 14 at all times.

The recording data which are read out in a burst from the memory 14 in a successive manner on recording tracks of the magneto-optical disc 2 by controlling the recording position on recording tracks of the magneto-optical disc 2 by using the system controller 7. As mentioned above, data write area having a capacity of more than a predetermined quantity is always ensured in the memory 14. Accordingly, if the operation of recording on the magneto-optical disc 2 is interrupted by the occurrence of a track jump or other incident due to a disturbance which is detected by the system controller 7, a recovery operation can be carried out while inputted data continue to be written into the data write area having a capacity of more than a predetermined quantity, and the inputted data can be recorded on the recording track of the magneto-optical disc 2 in a successive manner.

It is to be noted that header time data corresponding to a physical address of the sector are added to the compressed audio data every sector and recorded on the magneto-optical disc 2. In addition, Table-of-contents data indicating the recording area or the recording contents are recorded in a Table-of-contents area.

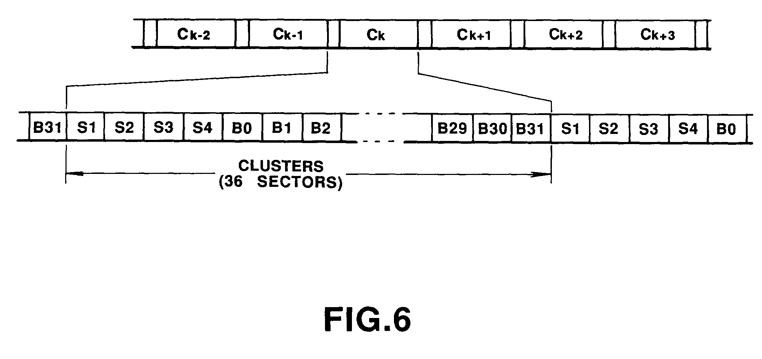

When attention is now drawn to recording data recorded as presence or absence of pits in the playback only area A₁₀ of the magneto-optical disc 2, it is seen that one cluster C is comprised of 36 sectors in total of 32 sectors (blocks) B0 - B31 and four sub-data sectors S1 - S4, as shown in Figure 6, with connection sectors L1 - L3 for recording data in the above-described recording/reproducing area A₂₀ shown in Figure 4 being as a sub-data sector S. Since there is no possibility that recording data in the playback only area A₁₀ is rewritten, it is possible to use the connection sectors L1 - L3 as sub-data sector S. By providing four sub-data sectors S1 - S4 every cluster in the playback only area A₁₀ in this way, it is possible to record, into the sub-data sectors S1 - S4, addition data of a quantity four times greater than that of addition data recorded in the sub-data sector S of the recording/reproducing area A₂₀.

The reproducing system in this optical disc recording/reproducing apparatus will now be described.

This reproducing system serves to reproduce recording data which have been successively recorded on the recording tracks of the playback only area A₁₀ and the recording/reproducing area A₂₀ of the magneto-optical disc 2, and includes a decoder 21 supplied with a reproduced output obtained by tracing recording tracks of the magneto-optical disc 2 by a laser beam from the optical head 3, i.e. a reproduced signal of the playback only area A₁₀ outputted through the changeover switch 40 from the first signal synthesis element 38, or a reproduced signal of recording/reproducing area A₂₀ outputted through the changeover switch 40 from the second signal synthesis element 39 under the state where the reproduced output, i.e. the reproduced signal of the region A₁₀ or the recording/reproducing area A₂₀ is binary-coded by the RF circuit 5.

The above-mentioned decoder 21 corresponds to the encoder 15 in the above-described recording system, and carries out processing such as decoding processing or EFM decoding processing as described above for error correction, etc. with respect to reproduced output binary-coded by the RF circuit 5 to reproduce the above-described compressed audio data at a transfer rate of 75 sectors/sec. The reproduced data obtained by the decoder 21 is delivered to the memory 22. The data write/read operations of the memory 22 are controlled by the system controller 7. Thus, reproduced data delivered at a transfer rate of 75 sectors/sec from the decoder 21 is written into the memory 22 in a burst at a transfer rate of 75 sectors/sec. Further, from the memory 22, the reproduced data written in a burst at the transfer rate of 75 sectors/sec is read out in a successive manner at a transfer rate of 15 sectors/sec.

The system controller 7 carries out such a memory control to write the reproduced data into the memory 22 at a transfer rate of 75 sectors/sec, and to read out in a successive manner the reproduced data from the memory 22 at the transfer rate of 15 sectors/sec.

Further, the system controller 7 carries out a memory control as described above with respect to the memory 22, and carries out control of the reproducing position so as to successively reproduce, from the recording track of the magneto-optical disc 2, the reproduced data written in a burst from the memory 22 by this memory control. The control of the reproducing position is carried out by controlling, using the system controller 7, the reproducing position of the reproduced data read out in a burst from the memory 22 to deliver a control signal for designating, to the servo control circuit 6, the reproducing position on the recording track of the magneto-optical disc 2.

Namely, the system controller 7 carries out a memory control, as shown in Figure 7: to increment a write pointer W of the memory 22 at a transfer rate of 75 sectors/sec for writing the reproduced data into the memory 22 at a transfer rate of 75 sectors/sec; to successively increment the read pointer R of the memory 22 at a transfer rate of 15 sectors/sec. For successively reading out the reproduced data from the memory 22 at a transfer rate of 15 sectors/sec; to stop the write operation when the write pointer W catches up with the read pointer R; and to increment the write pointer W of the memory 22 in a burst at a transfer rate of 75 sectors/sec so as to carry out a write operation when the data quantity of the reproduced data stored in the memory 22 is below a predetermined quantity L.

By such memory control by the system controller 7, compressed audio data reproduced from recording tracks of the magneto-optical disc 2 is written into the memory 22 in a burst at a transfer rate of 75 sectors/sec, and the compressed audio data is successively read out from the memory 14 as reproduced data at a transfer rate of 75 sectors/sec. Accordingly, while ensuring a data readout area having a capacity of more than a predetermined quantity L at all times in the memory 22, reproduced data can be successively read out from the memory 22. Further, the reproduced data read out in a burst from the memory 22 can be reproduced in a successive manner from the recording tracks of the magneto-optical disc 2 by controlling the reproducing position on the recording tracks of the magneto-optical disc 2 by using the system controller 7. In addition, since a data readout area having a capacity of more than a predetermined quantity L is ensured at all times in the memory 22 as described above, even in the case where the system controller 7 detects that a track jump, etc. takes place by disturbance, etc, to interrupt the reproducing operation with respect to the magneto-optical disc 2, it is possible to read out reproduced data from the data readout area having a capacity of more than a predetermined quantity L to successively provide an output of analog audio signals. Thus, a recovery processing operation can be carried out during that time period.

The compressed audio data obtained as reproduced data successively read out from the memory 22 at a transfer rate of 15 sectors/sec is delivered to an ATRAC decoder 23. This ATRAC decoder 23 corresponds to the ATRAC encoder 13 of the recording system. When an operational mode is designated by the system controller 7, the ATRAC decoder 23 in this optical disc recording/reproducing apparatus reproduced digital audio data having a transfer rate of 75 sectors/sec by expanding the compressed audio data to five times. The digital audio data thus obtained is delivered from the ATRAC decoder 23 to a D/A converter 24.

The D/A converter 24 converts digital audio data delivered from the ATRAC decoder 23 to data in an analog form to form an analog audio signal A_{OUT}. The analog audio signal A_{OUT} obtained by the D/A converter 24 is outputted from an output terminal 26 through a low-pass filter 25.

It is to be noted that the reproducing system of the optical disc recording/reproducing apparatus of this embodiment has also a digital output function. By the ATRAC encoder 23, digital audio data is outputted from a digital output terminal 26 as a digital audio signal d_{OUT} through a digital output encoder 27.

As stated above, in the optical disc recording/reproducing apparatus of this embodiment, recording data obtained by implementing, using the ATRAC encoder 13, data compression to digital audio data obtained by digitizing, using the A/D converter 12, analog audio signals A_{IN}, i.e. successive signals is divided into clusters every fixed number of sectors, and cluster connection sectors L1 - L3 longer than an interleaving length in the interleaving processing are provided at connection portions of respective clusters C, thus to implement interleaving processing thereto to record the data thus processed into the recording/reproducing area A₂₀ of the magneto-optical disc 2 every cluster, and to reproduce recorded data from the recording/reproducing area A₂₀. Since recording data is separated every cluster by providing the cluster connection sectors L1 - L3 as described above, recording/reproduction of recording data having a data structure in which an extremely long convoluted interleaving processing is implemented can be carried out.

Further, from the playback only area A₁₀ where recording data is recorded in accordance with the same data format as that of the recording/reproducing area A₂₀, and additional data are recorded in four sub-code sectors S1 - S4 which correspond to the cluster connection sectors L1 - L3, recorded data and addition data are reproduced. Then, time-base expansion processing is implemented to reproduced data from the recording/reproducing means or the reproducing or playback means by using the reproduced data memory means. Thus, the recording area for additional data where recording/reproducing area A₂₀ are recorded is ensured in the playback only area A₁₀, thus making it possible to reproduce additional data along with the recorded data.

Here, in the optical disc recording/reproducing apparatus of this embodiment, magneto-optical disc 2 including both the playback only area A₁₀ and the recording/reproducing area A₂₀ is used as a recording medium. However, there may be used a magneto-optical disc as a recording medium, in which the entire area is caused to be the recording/reproducing area A₂₀ without provision of the playback only area A₁₀ to record, into the recording/reproducing area A₂₀, recording data of the above-described data structure shown in Figure 4 provided with cluster connection sectors longer than an interleaving length in the interleaving processing provided at connection portions of respective clusters of recording data divided into clusters every fixed number of sectors, and to reproduce the recorded data from the recording/reproducing area A₂₀.

Further, there may be used a reproduction or playback only disc as a recording medium, in which the entire area is caused to be the playback only area A₁₀, without provision of the recording/reproducing area A₂₀, and recording data of the above-described data structure shown in Figure 6 are recorded on the entire surface, thus to reproduce recorded data of the playback only area A₁₀. In the playback only optical disc, cluster connection sectors provided at connection portions of respective clusters of recording data divided into clusters every fixed number of sectors may be used as sub-data sector to record in advance additional data therein, thereby making it possible to increase the quantity of additional data. Thus, a playback only disc having a recording area for additional data broader than than that of the magneto-optical disc, i.e. the recording/reproducing disc can be provided.

It is to be noted various data such as still picture data, character data or speech data, etc. are conceivable as the additional data.

As is clear from the foregoing description, in the disc recording/reproducing apparatus according to an embodiment of the invention, recording data are obtained by implementing time base compression processing to successively inputted data caused to be in a digital form and divided into clusters every fixed number of sectors to provide cluster connection sectors longer than an interleaving length in the interleaving processing at connection portions of respective clusters for implementing interleaving processing. The interleaved recording data are recorded in every cluster in a recording/reproducing are, and recorded data are reproduced from the recording/reproducing area. Since recording data of each cluster is separated by the cluster connection sectors, it is possible to carry out recording/reproduction of recording data having a data structure in which an extremely long convoluted interleaving processing is implemented. Further, the reproducing means reproduces recorded data and additional data from a playback only area where recording data is recorded by the same data format as that of the recording/reproducing area and additional data are recorded in sectors corresponding to the cluster connection sectors. Then, time-base expansion processing is implemented to reproduced data from the recording/reproducing means or the reproducing or playback means by using the reproduced data memory means. Thus, a recording region for additional data is ensured in the playback only area or playback only disc where recording data of the same data structure as that of the recording/reproducing area are recorded, thus making it possible to reproduce additional data along with recording data.

Accordingly, an embodiment of the invention can provide a disc recording/reproducing apparatus in which recording/reproduction of recording data having a data structure incorporation an extremely long convoluted interleaving processing can be carried out, and a recording area for additional data is ensured in a playback only area or a playback only disc where recording data of the same data structure as that of the recording data are recorded, thus making it possible to reproduce additional data together with recorded data.

Further, in a playback only disc according to an embodiment of the invention, since additional data are recorded in cluster connection sectors longer than the interleaving length in the interleaving processing at connection portions of respective clusters, where recording data is divided into clusters every fixed number of sectors, the quantity of additional data can be increased. Accordingly, there can be provided a playback only disc having a recording area for additional data broader than that of the recording/reproducing disc.

In addition, in disc according to an embodiment of the invention, recording data is divided into clusters every fixed number of sectors, and cluster connection sectors longer than the interleaving length in the interleaving processing are provided at connection portions of respective clusters. Accordingly, it is possible to carry out recording/reproduction of data to which the interleaving processing is implemented every cluster through the recording/reproducing area. Further, from the playback only area, recording data of the same data format as that of the recording/reproducing area can be reproduced together with additional data. Accordingly, there can be provided a disc including a recording/reproducing area where recording/reproduction of recording data of a data structure in which an extremely long convoluted interleaving processing is implemented is carried out, and a recording area where recording data of the same data structure as that of the recording/reproducing region are recorded along with additional data.

An embodiment of the invention enables recording/reproduction of recording data having a data structure in which an extremely long convoluted interleaving processing.

A disc recording/reproducing apparatus can be adapted so that a recording area for additional data is ensured in a reproduction or playback only area or a reproduction or playback disc where recording data of the same data structure of the above-mentioned recording data are recorded, thereby making it possible to reproduce additional data along with recording data.

A reproduction or playback only disc can be provided having a recording area for addition data broader than that of a recording/reproducing disc. A disc can be provided with a recording/reproducing region where recording/reproduction of recording data of a data structure, in which an extremely long convoluted interleaving processing is implemented, can be carried out, and a recording area where recording data of the same data structure as that of the recording/reproducing area can be recorded along with additional data.

## Claims

1. A disc recording/reproducing apparatus comprising:
memory means (14) into which successively inputted data caused to be in a digital form are sequentially written, and from which the written inputted data are sequentially read out as recording data having a transfer rate higher than a transfer rate of the inputted data;
recording/reproducing means (15) in which recording data read out from said memory means are divided into clusters (Cₖ) every predetermined number of sectors (B0-B31), and cluster connection sectors (L1-L3) longer than an interleaving length for interleaving processing are provided at connection portions of respective clusters, thus to implement interleaving processing on recording data to record them in a recording/reproducing area every cluster and to reproduce the recorded data from said recording/reproducing area;
reproducing means (21) for reproducing recorded data and additional data; and
memory means (22) into which reproduced data from said recording/reproducing means or said reproducing means are written, and from which the written reproduced data are sequentially read out as successive reproduced data; characterised in that the reproducing
means is for reproducing recorded data and additional data from a reproduction or playback only area (A₁₀) where recording data are recorded by the same data format as that of said recording/reproducing area and the additional data are recorded in sectors (S1-S4) corresponding to cluster connection sectors.

2. A reproduction or playback only disc suitable for reproduction by said disc recording/reproducing apparatus according to claim 1, wherein recording data is divided into clusters every predetermined number of sectors, cluster connection sectors longer than an interleaving length in the interleaving processing are provided at connection portions of respective clusters, recording data to which interleaving processing is implemented are recorded every cluster and additional data are recorded in advance in said cluster connection sectors.

3. A reproduction or playback only disc accordingly to claim 2, wherein said additional data are still picture data.

4. A disc suitable for recording and reproduction by said disc recording/reproducing apparatus according to claim 1, said disc including:
a recording/reproducing area (A₂₀) where recording data are divided into clusters every predetermined number of sectors, cluster connection sectors longer than an interleaving length in the interleaving processing are provided at connection portions of respective clusters and recording data to which interleaving processing is implemented are recorded every cluster; and
characterised by
a reproduction or playback only area (A₁₀) where recording data of the same data format as that of said recording/reproducing area are recorded, and additional data are recorded in sectors corresponding to said cluster connection sectors.

5. A disc according to claim 4, wherein dummy data are recorded in connection sectors of said recording/reproducing area.

6. A disc according to claim 4, wherein said additional data are still picture data.

## Patentansprüche

1. Platten-Aufzeichnungs/Wiedergabe-Gerät, das umfaßt:
ein Speichermittel (14), in das hintereinander eingegebene Daten, die in eine digitale Form gebracht worden sind, hintereinander eingeschrieben werden und aus dem die eingeschriebenen eingegebenen Daten aufeinanderfolgend als Aufzeichnungsdaten, die eine Übertragungsrate haben, welche höher als eine Übertragungsrate der eingegebenen Daten ist, ausgelesen werden,
ein Aufzeichnungs/Wiedergabe-Mittel (15), in dem Aufzeichnungsdaten, die aus dem Speichermittel ausgelesen sind, in Cluster (Ck) für jede vorbestimmte Anzahl von Sektoren (B0 - B31) unterteilt werden und Cluster-Verbindungssektoren (L1 - L3), die länger als eine Verschachtelungslänge für eine Verschachtelungsverarbeitung sind, bei Verbindungsteilen jeweiliger Cluster vorgesehen sind, um auf diese Weise die Verschachtelungsverarbeitung an Aufzeichnungsdaten zu vollziehen, um sie in einem Aufzeichnungs/Wiedergabe-Bereich für jeden Cluster aufzuzeichnen und um die aufgezeichneten Daten aus dem Aufzeichnungs/Wiedergabe-Bereich wiederzugeben,
ein Wiedergabemittel (21) zum Wiedergeben aufgezeichneter Daten und zusätzlicheer Daten und
ein Speichermittel (22), in das wiedergegebene Daten aus dem Aufzeichnungs/Wiedergabe-Mittel oder dem Wiedergabemittel eingeschrieben werden und aus dem die eingeschriebenen wiedergegebene Daten aufeinanderfolgend als hintereinander wiedergegebene Daten ausgelesen werden,
dadurch **gekennzeichnet**, daß das Wiedergabemittel zum Wiedergeben aufgezeichneter Daten und zusätzlicher Daten aus einem Wiedergabe- oder Nur-Abspiel-Bereich (A₁₀) dient, wo Aufzeichnungsdaten mit dem gleichen Datenformat wie demjenigen des Aufzeichnungs/Wiedergabe-Bereichs aufgezeichnet werden und die zusätzlichen Daten in Sektoren (S1 - S4) aufgezeichnet werden, die Cluster-Verbindungssektoren entsprechen.

2. Aufzeichnungs- oder Nur-Wiedergabe-Platte, die zum Wiedergeben mittels des Platten-Aufzeichnungs/Wiedergabe-Geräts nach Anspruch 1 geeignet ist, wobei Aufzeichnungsdaten in Cluster für jede vorbestimmte Anzahl von Sektoren unterteilt werden, Cluster-Verbindungssektoren, die länger als eine Verschachtelungslänge in der Verschachtelungsverarbeitung sind, bei Verbindungsteilen jeweiliger Cluster vorgesehen sind, Aufzeichnungsdaten, an denen eine Verschachtelungsverarbeitung vollzogen ist, für jeden Cluster aufgezeichnet werden und zusätzliche Daten vorab in den Cluster-Verbindungssektoren aufgezeichnet werden.

3. Aufzeichnungs- oder Nur-Wiedergabe-Platte nach Anspruch 2, wobei die zusätzlichen Daten Unbewegtbilddaten sind.

4. Platte, die zum Aufzeichnen und Wiedergeben mittels des Platten-Aufzeichnungs/Wiedergabe-Geräts nach Anspruch 1 geeignet ist, wobei die Platte enthält:
einen Aufzeichnungs/Wiedergabe-Bereich (A₂₀), wo Aufzeichnungsdaten in Cluster für jede vorbestimmte Anzahl von Sektoren unterteilt werden, Cluster-Verbindungssektoren, die länger als eine Verschachtelungslänge für eine Verschachtelungsverarbeitung sind, bei Verbindungsteilen jeweiliger Cluster vorgesehen sind und Aufzeichnungsdaten, an denen eine Verschachtelungsverarbeitung vollzogen ist, für jeden Cluster aufgezeichnet werden, **gekennzeichnet** durch
einen Wiedergabe- oder Nur-Abspiel-Bereich (A₁₀), wo Aufzeichnungsdaten mit dem gleichen Datenformat wie demjenigen des Aufzeichnungs/Wiedergabe-Bereichs aufgezeichnet werden und zusätzlichen Daten in in Sektoren aufgezeichnet werden, die Cluster-Verbindungssektoren entsprechen.

5. Platte nach Anspruch 4, bei der Scheindaten in Verbindungssektoren des Aufzeichnungs/Wiedergabe-Bereichs aufgezeichnet werden.

6. Platte nach Anspruch 4, wobei die zusätzlichen Daten Unbewegtbilddaten sind.

## Revendications

1. Un appareil d'enregistrement/reproduction de disques comprenant :
des moyens de mémoire (14) dans lesquels des données introduites successivement, qui sont placées sous une forme numérique, sont écrites séquentiellement, et à partir desquels les données introduites écrites sont lues séquentiellement sous la forme de données d'enregistrement ayant une cadence de transfert supérieure à une cadence de transfert des données introduites;
des moyens d'enregistrement/reproduction (15) dans lesquels des données qui sont lues dans les moyens de mémoire sont divisées en groupements (C_{K}), ayant chacun un nombre prédéterminé de secteurs (B0 - B31), et des secteurs de liaison de groupements (L1 - L3), plus longs qu'une longueur d'entrelacement pour un traitement d'entrelacement, sont établis dans des parties de liaison de groupements respectifs, pour réaliser ainsi un traitement d'entrelacement sur des données d'enregistrement, afin de les enregistrer dans une zone d'enregistrement/ reproduction, conformément à chaque groupement, et de reproduire les données enregistrées à partir de la zone d'enregistrement/reproduction; des moyens de reproduction (21) pour reproduire des données enregistrées et des données supplémentaires; et
des moyens de mémoire (22) dans lesquels des données reproduites provenant des moyens d'enregistrement/reproduction ou des moyens de reproduction sont écrites, et à partir desquels les données écrites reproduites sont lues séquentiellement sous la forme de données reproduites successives; caractérisé en ce que les moyens de reproduction sont destinés à reproduire des données enregistrées et des données supplémentaires à partir d'une zone prévue seulement pour la reproduction (A₁₀), dans laquelle des données d'enregistrement sont enregistrées avec un format de données identique à celui de la zone d'enregistrement/ reproduction, et les données supplémentaires sont enregistrées dans des secteurs (S1 - S4) correspondant aux secteurs de liaison de groupements.

2. Un disque prévu seulement pour la reproduction, convenant pour une opération de reproduction par l'appareil d'enregistrement/ reproduction de disques conforme à la revendication 1, dans lequel des données d'enregistrement sont divisées en groupements ayant chacun un nombre prédéterminé de secteurs, des secteurs de liaison de groupements plus longs qu'une longueur d'entrelacement dans le traitement d'entrelacement sont établis dans des parties de liaison de groupements respectifs, des données d'enregistrement auxquelles un traitement d'entrelacement est appliqué sont enregistrées dans chaque groupement, et des données supplémentaires sont enregistrées à l'avance dans les secteurs de liaison de groupements.

3. Un disque prévu seulement pour la reproduction, selon la revendication 2, dans lequel les données supplémentaires sont des données d'images fixes.

4. Un disque convenant pour l'enregistrement et la reproduction par l'appareil d'enregistrement/reproduction de disques selon la revendication 1, ce disque comprenant :
une zone d'enregistrement/reproduction (A₂₀), dans laquelle des données d'enregistrement sont divisées en groupements ayant chacun un nombre prédéterminé de secteurs, des secteurs de liaison de groupements plus longs qu'une longueur d'entrelacement dans le traitement d'entrelacement sont établis dans des parties de liaison de groupements respectifs, et des données d'enregistrement auxquelles un traitement d'entrelacement est appliqué sont enregistrées dans chaque groupement; et étant caractérisé par
une zone prévue seulement pour la reproduction (A₁₀), dans laquelle des données d'enregistrement ayant un format de données identique à celui de la zone d'enregistrement/reproduction sont enregistrées, et des données supplémentaires sont enregistrées dans des secteurs correspondant aux secteurs de liaison de groupements.

5. Un disque selon la revendication 4, dans lequel des données fictives sont enregistrées dans des secteurs de liaison de la zone d'enregistrement/reproduction.

6. Un disque selon la revendication 4, dans lequel les données supplémentaires sont des données d'images fixes.
